(19)

Europäisches
Patentamt
European
Patent Office
Office européen
des brevets

(11) **EP 2 283 073 B1**

(12) **EUROPEAN PATENT SPECIFICATION**

(45) Date of publication and mention
of the grant of the patent:
**12.09.2012 Bulletin 2012/37**

(21) Application number: **09739455.5**

(22) Date of filing: **22.04.2009**

(51) Int Cl.:
***C08L 27/06*** (2006.01)

(86) International application number:
**PCT/US2009/041350**

(87) International publication number:
**WO 2009/134653 (05.11.2009 Gazette 2009/45)**

(54) **PLASTIC SURFACES HAVING IMPROVED SURFACE CHARACTERISTICS**

KUNSTSTOFFOBERFLÄCHEN MIT VERBESSERTEN OBERFLÄCHENEIGENSCHAFTEN

SURFACES DE MATIÈRE PLASTIQUE AYANT DES CARACTÉRISTIQUES DE SURFACE
AMÉLIORÉES

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **30.04.2008 US 48972 P**

(43) Date of publication of application:
**16.02.2011 Bulletin 2011/07**

(73) Proprietor: **E. I. du Pont de Nemours and Company
Wilmington, DE 19898 (US)**

(72) Inventors:
• **SUBRAMANIAN, Narayanan, Sankara
Hockessin
DE 19707 (US)**

• **ZHANG, David, D.
Wilmington
DE 19850 (US)**

(74) Representative: **Towler, Philip Dean
Dehns
St Bride's House
10 Salisbury Square
London EC4Y 8JD (GB)**

(56) References cited:
**EP-A- 1 712 592        WO-A-92/03274
US-A1- 2005 260 246**

• **DATABASE WPI Week 200408 Thomson
Scientific, London, GB; AN 2004-074872
XP002538637 & JP 2002 244338 A (RICOH KK) 30
August 2002 (2002-08-30)**

**Description**

BACKGROUND OF THE DISCLOSURE

Field of the Disclosure

The present disclosure relates to plastic surfaces having improved surface characteristics and in particular to polyvinyl chloride substrates having improved surface characteristics.

Description of the Related Art

Polymer compositions are made into parts, such as sheets or substrates, using known techniques such as extrusion or injection molding. Polymers that are made into parts may include thermoplastic polymers such as polyvinyl chloride (PVC), acrylonitrile/butadiene/styrene (ABS) polymers, acrylic/styrene/acrylic polymers, polystyrenes, polyesters and polyamides. It would be desirable to impart properties, such as roughness, clean-ability, thermal conductivity, mold protection, mildew protection, protection from static, UV protection, etc., to these parts. Known processes for imparting properties to them include applying coatings to their surface(s). Applying a coating to the part substantially changes the dimensions of the part and adds to the cost of making said part.

A need exists for parts that have improved surface properties that are stable over time, and cost effective processes for manufacturing them. Furthermore, it is desirable that these surfaces can be produced during the manufacture of the part.

SUMMARY OF THE DISCLOSURE

In a first aspect, the disclosure provides a melt processible theromoplastic composition, comprising:

a major proportion of a base polymer comprising a first melt processible thermoplastic polymer having a first Fedor's solubility parameter and a first viscosity; and
a combination of a carrier polymer and a surface modifying additive, the carrier polymer comprising a second melt processible thermoplastic polymer which has a second solubility parameter that is at least about 2.5 $(J/cm^3)^{1/2}$ lower than the first solubility parameter, and a second viscosity, the carrier polymer being adhered to the surface modifying additive, and wherein the first viscosity is at least about 25 times the second viscosity, more typically at least about 30 to about 50 times the second viscosity, still more typically at least about 100 times the second viscosity, as measured by a Cone and Plate viscometer at 190°C, at 6.283 rad s$^{-1}$ and at 500 s; and wherein the base polymer is polyvinyl chloride. By 'adhered' we mean that the carrier polymer and the surface modifying additive are intimately mixed or dispersed with each other, or that the surface modifying additive is coated with the carrier polymer.

In the first aspect, the combination of carrier polymer and a surface modifying additive is made by a masterbatch process.

In the first aspect, the combination of carrier polymer and a surface modifying additive is a coated polymer. By "coated" we mean completely or partially coated. The coating may be a liquid or a solid.

In the first aspect, the combination of carrier polymer and a surface modifying additive is a physical blend.

In the first aspect, the surface modifying additive is a particle having a size up to about 15 micrometers in diameter treated with nano or pigmentary sized inorganic particles. By treated we mean partially or completely coated. The coating may be a liquid or a solid.

Also disclosed herein is a part, more typically a substrate, having a first surface and a second surface, wherein the part comprises a major proportion of the above thermoplastic composition.

In a second aspect, the invention comprises a process for making a part having improved surface characteristics comprising:

providing a base polymer comprising a first melt processible thermoplastic polymer having a first Fedor's solubility parameter and a first viscosity;
forming a combination of a carrier polymer and a surface modifying additive, the carrier polymer comprising a second melt processible thermoplastic polymer that has a second solubility parameter that is at least about 2.5 $(J/cm^3)^{1/2}$ lower than the first solubility parameter and a second viscosity, the carrier polymer being adhered to the surface modifying additive;
processing a major proportion of a base polymer and the combination of a carrier polymer and a surface modifying additive formed in the previous step wherein the first viscosity is at least about 25 times the second viscosity, more typically at least about 30 to about 50 times the second viscosity, still more typically at least about 100 times the second viscosity, as measured by a Cone and Plate viscometer at 190°C, at 6.283 rad s$^{-1}$ and at 500 s; and wherein the base polymer is polyvinyl chloride; to form a part having improved surface characteristics.

The processing may comprise extrusion or injection molding.

DETAILED DESCRIPTION OF THE DISCLOSURE

The disclosure relates to a melt processible thermoplastic composition, a part, and a process for making a part having improved surface characteristics. The melt processible, theromoplastic composition comprises a major proportion of a base polymer comprising a first melt processible thermoplastic polymer having a first Fedor's solubility parameter and a first viscosity; and a combination of a carrier polymer and a surface modifying additive, the carrier polymer comprising a second melt processible thermoplastic polymer which has a second solubility parameter that is at least about 2.5 (J/cm^3)^1/2 lower than the first solubility parameter, and a second viscosity, the carrier polymer being adhered to the surface modifying additive, and wherein the first viscosity is at least about 25 times the second viscosity, more typically at least about 30 to about 50 times the second viscosity, still more typically at least about 100 times the second viscosity, as measured by a Cone and Plate viscometer at 190°C, at 6.283 rad s$^{-1}$ and at 500 s; and wherein the base polymer is polyvinyl chloride.

Base Polymer:

The base polymer comprising a first melt processible thermoplastic polymer having a first Fedor's solubility parameter and a first viscosity according to the present invention is polyvinyl chloride.
By "melt- processable," it is meant a polymer that can be extruded, or otherwise converted into shaped articles through a stage that involves obtaining the polymer in a molten state.
The base polymer may be present in the amount of about 80 to about 99.95% by weight, more typically about 90 to about 99 % by weight, based on the entire weight of the melt processible thermoplastic composition.

Other Additives

A wide variety of additives may be present in the melt processible thermoplastic compositions used to prepare the parts of this disclosure having improved surface characteristics as necessary, desirable or conventional. Such additives include polymer processing aids such as fluoropolymers and fluoroelastomers, catalysts, initiators, anti-oxidants (e.g., hindered phenol such as butylated hydroxytoluene), thermal stabilizers, blowing agent, ultraviolet light stabilizers (e.g., hindered amine light stabilizers or "HALS"), organic pigments including tinctorial pigments, plasticizers, antiblocking agents (e.g. clay, talc, calcium carbonate, silica and silicone oil) leveling agents, flame retardants, anti-cratehng additives, antistatic and slip additives.

Carrier Polymer:

The carrier polymer is a second melt processible thermoplastic polymer that is not totally compatible with the base polymer. By "not totally compatible" we mean Fedor's solubility parameter differences of greater than at least about 2.5 (J/cm^3)^1/2.
The second melt processible thermoplastic polymer has a second solubility parameter that is at least about 2.5 (J/cm^3)^1/2 lower than the first solubility parameter, more typically, about 3 (J/cm^3)^1/2 lower than the first solubility parameter. The first viscosity (base polymer) is at least about 25 times the second viscosity (carrier polymer), more typically at least about 30 to about 50 times the second viscosity, still more typically at least about 100 times the second viscosity.
By 'adhered' we mean that the carrier polymer and the surface modifying additive are intimately mixed or dispersed with each other, or that the surface modifying additive is coated with the carrier polymer. Some suitable carrier polymers include ethylene vinyl acetate copolymers, acrylate copolymers, polyethylene, polypropylene and their copolymers as well as homo and co-polymers of tetrafluroethylene.
The carrier polymer may be present in the amount of about 0.05 to about 20% by weight, more typically about 0.5 to about 15 % by weight, based on the entire weight of the combination.

Surface Modifying Additive:

The surface modifying additive may be a solid or a liquid. The surface modifying agent may be a solid selected from the group consisting of silicates; metal oxides; calcium carbonate; barium sulfate; elemental metal powders such as iron, titanium, copper; and silicas such as fumed silica, and mixtures thereof. Representative examples of oxides include oxides of titanium, magnesium, calcium, barium, strontium, zinc, tin, nickel, silicon, and iron, and fumed silica. Other metal oxides include oxides of selenium, tungsten, ruthenium, tin, tantalum, silver, iridium, molybdenum, niobium, indium, cadmium, hafnium, zirconium, manganese, copper (I), vanadium, chromium (VI), yttrium, germanium, and mixed oxides, such as aluminosilicate and $Ti_xZr_{1-x}O_2$ wherein x is between 0 and 1.

Typically the inorganic particles may be pigmentary or nano-sized and have a particle size diameter of about $0.02\mu m$ to about $50\mu m$, more typically from about $0.1~\mu m$ to about $25\mu m$ and most preferably from about $0.5\mu m$ to about $10~\mu m$. Suitable particles can have a diameter of less than about 500 nm or may be formed from agglomerates of primary particles having a size from about 2 to about 1000nm. Alternately, the inorganic particle may comprise a pigmentary particle treated with nano-sized partilces. By treated we mean the pigmentary particles may be partially or completely coated with the nano-sized particles.

The inorganic particles may be hydrophobically treated with organic surface treatment materials having a low surface energy versus the base polymer that include, but are not limited to, for example, organo-silanes; organo-siloxanes; fluoro-silanes; organo-phosphonates; organo-phosphoric acid compounds such as organo-acid phosphates, organo-pyrophosphates, organo-polyphosphates, and organo-metaphosphates; organo-phosphinates; organo-sulfonic compounds; hydrocarbon-based carboxylic acids and associated derivatives and polymers; hydrocarbon-based amides; low molecular weight hydrocarbon waxes; low molecular weight polyolefins and co-polymers thereof; hydrocarbon-based polyols and derivatives thereof; alkanolamines and derivatives thereof; and commonly utilized organic dispersing agents; all the above utilized either individually or as mixtures, applied in concert or sequentially.

Suitable organo-silanes for use in the practice of this disclosure include silanes disclosed in U.S. Patent No. 5,560,845 issued to Birmingham, Jr. et al. on October 1, 1996, having the general formula

$$Si(R^1)(R^2)(R^3)(R^4) \qquad (I)$$

in which at least one R is a non-hydrolyzable organic group, such as alkyl, cycloalkyl, aryl, or aralkyl, having 1-20 carbon atoms, typically 4-20 carbon atoms, most typically 6-20 carbon atoms, and at least one R is a hydrolyzable group such as alkoxy, halogen, acetoxy, or hydroxy. The other two R are, independently, hydrolyzable or non-hydrolyzable as above. It is typical that at least two, and especially that three, of the R are hydrolyzable. The non-hydrolyzable R can be fully or partially fluorine substituted. A silane having the foregoing description is herein called "organo-silane" in reference to the non-hydrolyzable R group(s). Organo-silanes may be linear or branched, substituted or unsubstituted, and saturated or unsaturated. Typically, non-hydrolyzable R groups are nonreactive. Alkyl, cycloalkyl, aryl, and aralkyl are typical non-hydrolyzable R, with alkyl being most typical, including the possibility of any of these groups being fully or partially fluorine substituted. When the hydrolyzable R are identical, the organo-silane can be represented by

$$R^5xSiR^6{}_{4-x} \qquad (II)$$

wherein $R^5$ is non-hydrolyzable and $R^6$ is hydrolyzable as defined above and x=1-3. Typically $R^6$ include methoxy, ethoxy, chloro, and hydroxy. Ethoxy is especially typical for ease of handling. Some typical organo-silanes include octyltriethoxysilane, nonyltriethoxysilane, decyltriethoxysilane, dodecyltriethoxysilane, tridecyltriethoxysilane, tetradecyltriethoxysilane, pentadecyltriethoxysilane, hexadecyltriethoxysilane, heptadecyltriethoxysilane and octadecyltriethoxysilane. Mixtures of organo-silanes can be used.

In embodiments utilizing organo-silanes represented by Formula II, preferred silanes are $R^5$=8-18 carbon atoms; $R^6$=ethoxy; and x=1 to 3. The $R^5$=8-18 carbon atoms are preferred, for example for enhanced processability. $R^6$=ethoxy is preferred for ease of handling. Most typical is octyltriethoxysilane. Some other examples of hydrophobic surface treatment materials are described in detail in US2005/023992 published October 27, 2005. More typically the hydrophobically treated inorganic particles include hydrophobically treated fumed silica available commercially under the product designation Peroxide® LE1 (sold by Degussa Evonik, Parsippany, NJ) and titanium dioxide available commercially under the product designation R-104 (sold by E. I. du Pont de Nemours and Company, Wilmington, DE).

The surface modifying additive may also include carbonates, sulfates, titanates, arsenides, sulfides, selenides, phosphides and combinations of two or more thereof. Representative examples of carbonates and sulfates are carbonates and sulfates of calcium, barium, and strontium. Representative of titanates are titanates of barium, strontium, and calcium. The particles may be pigmentary or nano-sized particles.

Inorganic and/or organic colored pigments for visual and aesthetic effects may also be useful. These pigments are commercially available materials well known to those skilled in the art. Examples of such pigments include various colored inorganic metal oxides such as Cobalt Chomites, Cobalt Titanates, Cobalt Phosphates and Bismuth Vanadates commercially available from Shepherd Color Company, Cincinnati, OH. Inorganic white pigments such as titanium dioxide (commercially available from E.I. du Pont de Nemours and Company, Wilmington, DE) can be employed. Also colored organic pigments such as copper phthalocyanine and quinachdone pigments may be added to add color and visual effects to the surfaces.

Biocides may be used as the surface modifying agent to protect the part from mold and mildew. Some suitable examples of biocides include silver based inorganic or organic additives, OBPA (10,10-oxybisphenoxarsine), IPBC (3-iodo-2-propynyl butyl carbamate) and inorganic oxides such as zinc oxide and titanium dioxide.

For self cleaning surfaces, liquid surface modifying additives such fluorochemicals and lecithin may be useful. The fluorochemicals include various perfluoroalkyl esters, fluohnated urethanes, fluorinated acrylic or methacrylic copolymers, fluorinated anionic surfactants, fluorinated sulfonamides, and fluorinated diols. Many such fluorochemicals are commercially available; the preferred distributor for fluorochemicals for use with this invention is E.I. du Pont de Nemours and Company, Wilmington, DE. Some examples or useful fluorochemicals include Zonyl® fluorochemicals such as FS-610, 8867-L-LX. The lecithin additive may be acylated, most typically the lecithin additive is acetylated. A more detailed description of the production of acylated lecithin can be found in U.S. Patents 3,301 ,881 and 4,479,977.

For imparting antistatic property, surface modifying additives such as carbon black, potassium ionomer from DuPont, Irgastat from Ciba Corporation etc., may be useful. Other additives that may improve the surface characteristics of a finished product, such as a part, are also considered within the scope of this disclosure.

The surface modifying additive may be present in the amount of about 0.05 to about 20% by weight, more typically about 0.5 to about 15 % by weight, based on the entire weight of the combination.

Preparation of the Part:

The base polymer, the combination of carrier polymer and surface modifying additive, together with any additives, can be formed into any suitable shaped article of manufacture such as a film, container, bottle, tube, sheet/plate/profile, industrial or consumer part. Especially suitable articles are those that may be exposed to dirt and grime such as exterior architectural building parts including without limit, window casings, exterior siding and containers for products including consumer products (e.g. personal care products or residential cleaning products) or industrial products (e.g. industrial cleaning products). The combination of carrier polymer and surface modifying additive may be made by a masterbatch process. Masterbatch is a concentrated mixture of pigments and/or additives encapsulated during a heat process into a carrier polymer which is then cooled and cut into a granular shape. A masterbatch process is the incorporation or dispersion of such pigments and/or additive into a polymer and can be carried out using a twin screw extruder or other polymer processing equipment. Selection of the screw design and other details on ways to prepare a masterbatch to obtain the best dispersion can be found in "Masterbatch production on co-rotating twin screw extruders" on page 36 in the March/April 2007 issue of "Plastics Additives and Compounding". Alternately, the combination of carrier polymer and surface modifying additive may be a physical blend or coated polymer wherein the coating may be a solid or a liquid.

The process for making a part having improved surface characteristics comprises: providing a base polymer comprising a first melt processible thermoplastic polymer having a first Fedor's solubility parameter and a first viscosity; providing a base polymer comprising a first melt processible thermoplastic polymer having a first Fedor's solubility parameter and a first viscosity;

forming a combination of a carrier polymer and a surface modifying additive, the carrier polymer comprising a second melt processible thermoplastic polymer that has a second solubility parameter that is at least about 2.5 $(J/cm^3)^{1/2}$ lower than the first solubility parameter and a second viscosity, the carrier polymer being adhered to the surface modifying additive;

processing a major proportion of a base polymer and the combination of a carrier polymer and a surface modifying additive formed in the previous step wherein the first viscosity is at least about 25 times the second viscosity, more typically at least about 30 to about 50 times the second viscosity, still more typically at least about 100 times the second viscosity, as measured by a Cone and Plate viscometer at 190°C, at 6.283 rad $s^{-1}$ and at 500 s; and wherein the base polymer is polyvinyl chloride; to form a part having improved surface characteristics.

The processing may comprise extrusion or injection molding.

EXAMPLES

Tests:

Cleanability:

The extruded samples were tested for dirt pick up resistance (DPR). Extruded samples of the part were cut to a size of 1.5" x 2" (3.8 x 5.1 cm) and mounted on a 4" x 6" (10.2 x 15.2 cm) metal panel. The panel that held the samples was then inserted into a 45 degree angle slot cut in a wooden block. The panels were placed in the bottom of a 3 gallon (11.4 litre) pail to help contain the dust. The dust composition consisted of:

62 g. Dry artificial dirt batch:

| | | |
|---|---|---|
| 19.35% | 12 g. | Silica Gel |
| 19.35% | 12 g. | Aluminum Oxide |
| 9.68% | 6 g. | Iron Oxide - (Black) |
| 1.61 % | 1 g. | Lamp Black powder |
| 50.00% | 31 g. | Local dried soil (pulverized with mortar and pestle) |

Dust Applicator:

The applicator was constructed by cutting a 1/2 cm (1.3 cm) diameter hole in the top of a scintillation vial cap. Two 45 mesh screens were cut and inserted inside the vial cap. The vial was filled in a chemical hood approximately 1/3 full with the ground dust mixture. Dust was applied to the samples by shaking the vial above the samples as one would a salt or pepper shaker. When the panels were completely covered with dust, the application process was complete. The excess dust was removed by lightly tapping the mounted panel on the wooden block inside the plastic 3 gallon bucket. The 4" x 6" (10.2 x 15.2 cm) panel which held the dusted samples was then placed on a Vortex-Genie2 (supplying a vibration source) for 30 second to remove any remaining dust. The panel was then tapped on the hood table top to dislodge any dust, and then vibrated again for 30 seconds to assure all loose dust had been removed. One final 10 second vibration was done above a clean C-fold paper towel to verify that all the dust has been removed. The panels were read to determine the L*a*b* values with a Hunter Lab Scan and graphed to demonstrate the paint panels DPR attributes.

Weatherometer Exposure:

The samples were placed in a Weather-Ometer (Atlas Ci 5000, Xenon Weather-Ometer,Chicago, Illinois) for a 24 hour exposure, using ASTM G155-1 test procedure which incorporated UV light, high temperature and simulated rain.
The clean panels were then read using LabScan Manufactured by HunterLab, Reston, VA , to determine their L*a*b* values and graphed.

$$DPR = 10 \times (1-(L^*_{si}-L^*_{ss})/(L^*_{ci}-L^*_{cs}))$$

Where
$L^*_{ss}$ is the L* reading of the soiled treated sample of the disclosure;
$L^*_{si}$ is the L* reading of the treated sample before soiling ;
$L^*_{cs}$ is the L* reading of the untreated soiled sample (control); and
$L^*_{ci}$ is the L* reading of the untreated sample before soiling (control).

Glossary:

PVC is Polyvinyl Chloride- Extrusion Grade, Polyone Corporation, Cleveland, OH Elvaloy® 741 is Ethylene Vinylacetate Carbon monoxide terpolymer from DuPont Company, Wilmington, DE
Elvax® 3180 is Ethylene Vinylacetate copolymer from DuPont Company, Wilmington, DE
Elvaloy®15024 AC is Ethylene Methylacrylate copolymer from DuPont Company, Wilmington, DE
TFE/VF/PFBE is a Laboratory made sample of a terpolymer of Tetrafluroethylene (57 wt%), Vinylfluoride (35 wt%), Perfuorobutylethylene
(8 wt%) from DuPont Company, Wilmington, DE
Zonyl® FS-61 0 is a Fluorophosphate additive from DuPont Company, Wilmington, DE
Teflon® Micro-powders MP-1100, MP-1200 and MP-1300 are sold by
DuPont Company, Wilmington, DE
R-350 and R-105 are pigmentary TiO2 from DuPont Company,
Wilmington, DE
Zinc oxide is an inorganic powder imported by Umicore Marketing
Services, Raleigh, NC
ABS is Acrylic Butadiene Styrene- Magnum® 700 from Dow Chemical Corporation, Midland, MI
ASA-Acrylic Styrene Acrylic- Luran® S757 from BASF Croporation,

Florham Park, NJ
Aeroxide®LE1 is nano Silicon dioxide from Degussa Evonik Corporation, Parsippany, NJ
Polypropylene 7825 is from Total Corporation, Deer Park, TX
PDMS is Polydimethyl siloxane 200 from Dow Corning, Midland, MI

Sample Preparation:

Combinations of Additive and carrier polymer and their method of preparation are shown in Table 1 below:

**Table 1- Combination of Carrier Polymers, additives and their method of preparation**

| Samples | Additives Type/ Level wt % | Method of Preparation | Equipment | T Deg C /RPM | Carrier Polymer |
|---|---|---|---|---|---|
| Sample 1 | ZnO/28% | Master Batch | W&P T/S Extruder | 220C/150 | Elvaloy® 741 |
| Sample 2 | Aeroxide® LE1/~20% | Master batch | W&P T/S Extruder | 220C/150 | Elvaloy® 741 |
| Sample 3 | TiO2/50% | Master Batch | W&P T/S Extruder | 220C/150 | Elvaloy® 741 |
| Sample 4 | Aeroxide® LE1/25% | Master Batch | W&P T/S Extruder | 220C/150 | Polypropylene 7825 |
| Sample 5 | ZnO/28% | Master Batch | W&P T/S Extruder | 220C/150 | Polypropylene 7825 |
| Sample 6 | Teflon® MP-1300/50% | Master Batch | W&P T/S Extruder | 220C/150 | Polypropylene 7825 |
| Sample 7 | Ti02 R-350/50% | Master Batch | W&P T/S Extruder | 220C/150 | Polypropylene 7825 |
| Sample 8 | TiO2 R-105/50% | Master Batch | W&P T/S Extruder | 220C/150 | Elvax® 3180 |
| Sample 9 | Teflon@ MP-1300 (50%) | Master Batch | W&P T/S Extruder | 220C/150 | Elvax® 15024 |
| Sample 10 | TFE Copolymer, 57% TFE/ 35%VF/8%P FBE | Coated with PDMS/Physical blend | None | Room Temp. | None |
| Sample 11 | Zonyl® FS 610-16X (1 %) | Physical Blend with PVC | None | Room Temp. | None |
| Sample 12 | Zonyl® FS 610-16X(0.5%) | Physical Blend with PVC | None | Room Temp. | None |
| Sample 13 | Teflon® MP-1200 (5%) | Physical blend with PVC | None | Room Temp. | None |
| Sample 14 | Teflon® MP-1100 (5%) | Physical blend with PVC | None | Room Temp. | None |
| Sample 15 | Teflon® MP-1300, coated with LE-1(4.3%) | Solid-solid coating | Hybridizer for solid-solid coating | Room Temp. | None |
| Sample 16 | Teflon® MP-1300 coated with TiO$_2$ (7.6%) | Solid-solid coating | Hybridizer for solid-solid coating | Room Temp. | None |
| Sample 17 | Teflon® MP-1300, coated with Aeroxide® LE-1 (4.3%) | Solid-solid coating | Hybridizer for solid-solid coating | Room Temp. | PDMS |
| Sample 18 | Teflon@ MP-1300 coated with TiO$_2$(7.6%) | Solid-solid coating | Hybridizer for solid-solid coating | Room Temp. | PDMS |

Examples 1 -10 and Comparative Examples 1 -4:

Base polymer identified in Table 2 and Samples 1 -2 and 4-8 and 10 were extruded using a small laboratory scale co-rotating Haake Rheomex TW-100 twin screw extruder (Haake Buchler Instruments Inc , Saddle brook, NJ) attached to a drive made by CW Brabender, (Hackensack, NJ), with two conical screws under the conditions outlined in Table 2. Base polymers identified in Table 2 and Samples 3, 9 and 11 -14 were injection molded into parts (4 "diameter by 0.125" thick disc) on a 10.5 oz Nissei FN 4000 injection molding machine at molding temperature at 225°C and under the conditions outlined in Table 2.

Table 2 Results and Examples of Extrusion/Injection Molding Runs

**Comparative Examples 1-3 and Examples 1-10 used Haake Rheomex TW-100 Laboratory Scale Twin Screw Extruder**

**Comparative Example 4 used Nisssei FN 4000 injection molding machine**

| Comparative Examples | Weight % of the additives | Sample # used (from Table 1) | Base[2] (BP) and Carrier Polymers (CP) | Viscosity ( Pa.Sec.at low SR) Ratio of BP to CP | Calculated Solubility Parameter[1] Difference (J/cm^3)^1/2 | Temp Deg C/RPM | DPR |
|---|---|---|---|---|---|---|---|
| Control Sample, Example 1 | 0 | - | PVC/None | 1* | 0 | 190C/50 | 0 |
| Example 2 | 20 | 1 | PVC/Elvaloy® 741 | 53 | 2.3 | 190C/50 | 0.08 |
| Example 3 | 20 | 2 | PVC/Elvaloy® 741 | 53 | 2.3 | 190C/50 | -0.3 |
| Example 4 | 20 | 3 | ABS Magnum 700/Elvaloy®741 | 18 | | 225C | 0.6 |
| Examples | | | | | | | |
| Example 1 | 20 | 4 | PVC/PP 7825 | 30 | 4.6 | 190C/50 | 4.6 |
| Example 2 | 20 | 5 | PVC/PP 7825 | 30 | 4.6 | 190C/50 | 4 |
| Example 3 | 7.5 | 6 | PVC/PP 7825 | 30 | 4.6 | 190C/50 | 4.5 |
| Example 4 | 7.5 | 7 | PVC/PP 7825 | .30 | 4.6 | 190C/50 | 4 |
| Example 5 | 7.5 | 8 | PVC/Elvax® 3180 | 47 | 3.8 | 190C/50 | 2.34 |
| Example 6 | 5 | 10 | PVC blend with Teflon® Copolymer- NO CP | N/A | 8.3**** | 190C/50 | 2.24 |
| Example 7 | 1 | 11 | PVC coated with Zonyl®FS-610-NO CP | N/A | >2.5 | 190C/50 | 4.04 |
| Example 8 | 0.5 | 12 | PVC coated with Zonyl®FS-610-NO CP | N/A | >2.5 | 190C/50 | 4.35 |
| Example 9 | 5 | 13 | PVC with Teflon®- NO CP | N/A | 8.3**** | 190C/50 | 2.73 |
| Example 10 | 5 | 14 | PVC with Teflon®- NO CP | N/A | 8.3**** | 190C/50 | 2.02 |

1 Solubility parameters were calculated using Fedor's method 2 All PVC Base Polymers contain 5 wt % of R-105 TIO2 * PVC Viscosity was measured by a Cone and Plate viscometer at 190C @6.283rad./sec and @500 sec.

All Carrier Polymer viscosities were measured at 190C **** Difference between Teflon® Polymer and PVC, copolymers will be about a unit less, 7.3 ***** The Calculated solubility parameter for ABS and ASA are about the same as PVC

As can be seen from the Dirt Pick-up Resistance data in Table 2 (DPR) the DPR values for the examples of the invention are higher than the values for the Comparative Examples 2-4 which use a compatible polymer Elvaloy® 741, whereas the polymers are incompatible in the examples of the invention. Higher DPR values indicate that these samples would have self cleaning to easy cleaning characteristics.

Examples 15-18:

Base polymer, polyvinyl chloride and Samples 15-18 are extruded as described in the above examples.

It is expected that DPR for these samples would be higher than the control sample.

**Claims**

1. A melt processible thermoplastic composition, comprising:

a major proportion of a base polymer comprising a first melt processible thermoplastic polymer having a first Fedor's solubility parameter and a first viscosity; and

a combination of a carrier polymer and a surface modifying additive, the carrier polymer comprising a second melt processible thermoplastic polymer which has a second solubility parameter that is at least 2.5 $J/cm^3)^{1/2}$ lower than the first solubility parameter, and a second viscosity, the carrier polymer being adhered to the surface modifying additive,

and wherein the first viscosity is at least 25 times the second viscosity, as measured by a Cone and Plate viscometer at 190°C, at 6.283 rad s$^{-1}$ and at 500 s; and wherein the base polymer is polyvinyl chloride.

2. The composition of claim 1 wherein the base polymer is present in the amount of 80 to 99.95% by weight, based on the entire weight of the melt processible thermoplastic composition.

3. The composition of claim 1 wherein the carrier polymer is selected from the group consisting of ethylene vinyl acetate copolymers; acrylate copolymers; polyethylene; polypropylene and their copolymers; and homo and co-polymers of tetrafluoroethylene.

4. The composition of claim 1 wherein the carrier polymer is present in the amount of 0.05 to 20% by weight, based on the entire weight of the combination.

5. The composition of claim 1 wherein the surface modifying additive is a solid selected from the group consisting of silicates; metal oxides; calcium carbonate; barium sulfate; elemental metal powders; silicas and mixtures thereof.

6. The composition of claim 5 wherein the metal oxides are selected from the group consisting of oxides of titanium, magnesium, calcium, barium, strontium, zinc, tin, nickel, silicon, and iron, selenium, tungsten, ruthenium, tantalum, silver, iridium, molybdenum, niobium, indium, cadmium, hafnium, zirconium, manganese, copper (I), vanadium, chromium (VI), yttrium, and germanium, fumed silica and mixed oxides aluminosilicate and $Ti_xZr_{1-x}O_2$ wherein x is between 0 and 1.

7. The composition of claim 1 wherein the surface modifying additive has a particle size diameter of 0.02 $\mu$m to 50 $\mu$m.

8. The composition of claim 1 wherein the surface modifying additive is selected from carbonates, sulfates, titanates, arsenides, sulfides, selenides, phosphides and combinations of two or more thereof; is selected from an inorganic pigment, an organic colored pigment, and mixtures thereof; is a biocide; is selected from fluorochemicals, lecithin and mixtures thereof; or is carbon black, or a potassium ionomer.

9. The composition of claim 1 wherein the surface modifying additive may be present in the amount of 0.05 to 20% by weight, based on the entire weight of the composition.

10. A process for making a part having improved surface characteristics comprising:

providing a base polymer comprising a first melt processible thermoplastic polymer having a first Fedor's solubility parameter and a first viscosity;

forming a combination of a carrier polymer and a surface modifying additive, the carrier polymer comprising a second melt processible thermoplastic polymer that has a second solubility parameter that is at least 2.5 $(J/cm^3)^{1/2}$ lower than the first solubility parameter and a second viscosity, the carrier polymer being adhered to the surface modifying additive;

processing a major proportion of a base polymer and the combination of a carrier polymer and a surface modifying additive formed in the previous step;

wherein the first viscosity is at least 25 times the second viscosity, as measured by a Cone and Plate viscometer at 190°C, at 6.283 rad s$^{-1}$ and at 500 s; and wherein the base polymer is polyvinyl chloride.

11. The process of claim 10 wherein the processing comprises extrusion.

12. The process of claim 10 wherein the processing comprises injection molding.

**Patentansprüche**

1. Schmelzverarbeitbare thermoplastische Zusammensetzung umfassend:

einen Hauptanteil eines Basispolymers, das ein erstes schmelzverarbeitbares thermoplastisches Polymer umfasst, das einen ersten Löslichkeitsparameter nach Fedor und eine erste Viskosität aufweist; und
eine Kombination von einem Trägerpolymer und einem oberflächenmodifizierenden Zusatzmittel, wobei das Trägerpolymer ein zweites schmelzverarbeitbares thermoplastisches Polymer umfasst, das einen zweiten Löslichkeitsparameter, der mindestens 2,5 (J/cm$^3$)$^{1/2}$ niedriger ist als der erste Löslichkeitsparameter, und eine zweite Viskosität aufweist, wobei das Trägerpolymer an dem oberfächenmodifizierenden Zusatzmittel befestigt ist,
und wobei die erste Viskosität mindestens 25 Mal höher ist als die zweite Viskosität, wie durch ein Kegel- und Plattenviskosimeter bei 190 °C, bei 6,283 rad s$^{-1}$ und bei 500 s gemessen; und wobei das Basispolymer Polyvinylchlorid ist.

2. Zusammensetzung nach Anspruch 1, wobei das Basispolymer in der Menge von 80 bis 99,95 Gew.-%, auf das Gesamtgewicht der schmelzverarbeitbaren thermoplastischen Zusammensetzung bezogen, vorliegt.

3. Zusammensetzung nach Anspruch 1, wobei das Trägerpolymer aus der Gruppe ausgewählt ist bestehend aus Ethylenvinylacetat-Copolymeren, Acrylat-Copolymeren, Polyethylen, Polypropylen und ihren Copolymeren; und Homo- und Copolymeren von Tetrafluorethylen.

4. Zusammensetzung nach Anspruch 1, wobei das Trägerpolymer in der Menge von 0,05 bis 20 Gew.-%, auf das Gesamtgewicht der Kombination bezogen, vorliegt.

5. Zusammensetzung nach Anspruch 1, wobei das oberflächenmodifizierende Zusatzmittel ein Feststoff ist ausgewählt aus der Gruppe bestehend aus Silicaten, Metalloxiden, Calciumcarbonat, Bariumsulfat, elementaren Metallpulvern, Siliciumdioxiden und Mischungen davon.

6. Zusammensetzung nach Anspruch 5, wobei die Metalloxide aus der Gruppe ausgewählt sind bestehend aus Oxiden von Titan, Magnesium, Calcium, Barium, Strontium, Zink, Zinn, Nickel, Silicium und Eisen, Selen, Wolfram, Ruthenium, Tantal, Silber, Iridium, Molybdän, Niob, Indium, Cadmium, Hafnium, Zirconium, Mangan, Kupfer(I), Vanadium, Chrom(VI), Yttrium und Germanium, pyrogener Kieselsäure und gemischten Oxiden aus Aluminosilicat und Ti$_x$Zr$_{1-x}$O$_2$, wobei x zwischen 0 und 1 liegt.

7. Zusammensetzung nach Anspruch 1, wobei das oberflächenmodifizierende Zusatzmittel einen Teilchengrößendurchmesser von 0,02 μm bis 50 μm aufweist.

8. Zusammensetzung nach Anspruch 1, wobei das oberflächenmodifizierende Zusatzmittel unter Carbonaten, Sulfaten, Titanaten, Arseniden, Sulfiden, Seleniden, Phosphiden und Kombinationen von zwei oder mehreren davon ausgewählt ist; unter einem anorganischen Pigment, einem organischen farbigen Pigment und Mischungen davon ausgewählt ist; ein Biozid ist; unter Fluorchemikalien, Lecithin und Mischungen davon ausgewählt ist; oder Ruß oder ein Kaliumionomer ist.

9. Zusammensetzung nach Anspruch 1, wobei das oberflächenmodiflzierende Zusatzmittel in der Menge von 0,05 bis 20 Gew.-%, auf das Gesamtgewicht der Zusammensetzung bezogen, vorliegen kann.

10. Verfahren zur Herstellung eines Teils, das verbesserte Oberflächencharakteristiken aufweist, umfassend:

das Bereitstellen eines Basispolymers, das ein erstes schmelzverarbeitbares thermoplastisches Polymer umfasst, das einen ersten Löslichkeitsparameter nach Fedor und eine erste Viskosität aufweist;

das Bilden einer Kombination von einem Trägerpolymer und einem oberflächenmodifizierenden Zusatzmittel, wobei das Trägerpolymer ein zweites schmelzverarbeitbares thermoplastisches Polymer umfasst, das einen zweiten Löslichkeitsparameter, der mindestens 2,5 $(J/cm^3)^{1/2}$ niedriger ist als der erste Löslichkeitsparameter, und eine zweite Viskosität aufweist, wobei das Trägerpolymer an dem oberfächenmodifizierenden Zusatzmittel befestigt ist;

das Verarbeiten eines Hauptanteils des Basispolymers und der Kombination von einem Trägerpolymer und einem oberflächenmodifizierenden Zusatzmittel, die im vorherigen Schritt gebildet worden ist;

wobei die erste Viskosität mindestens 25 Mal höher ist als die zweite Viskosität, wie durch ein Kegel- und Plattenviskosimeter bei 190 °C, bei 6,283 rad $s^{-1}$ und bei 500 s gemessen; und wobei das Basispolymer Polyvinylchlorid ist.

**11.** Verfahren nach Anspruch 10, wobei das Verarbeiten Extrudieren umfasst.

**12.** Verfahren nach Anspruch 10, wobei das Verarbeiten das Spritzgießen umfasst.

**Revendications**

**1.** Composition thermoplastique pouvant être transformée à l'état fondu, comprenant:

une proportion majeure d'un polymère de base comprenant un premier polymère thermoplastique pouvant être transformé à l'état fondu ayant un premier paramètre de solubilité de Fedor et une première viscosité; et
une combinaison d'un polymère formant support et d'un additif de modification de surface, le polymère formant support comprenant un second polymère thermoplastique pouvant être transformé à l'état fondu qui a un second paramètre de solubilité qui est au moins de 2,5 $(J/cm^3)^{1/2}$ inférieur au premier paramètre de solubilité, et une seconde viscosité, le polymère formant support adhérant à l'additif de modification de surface,
et dans laquelle la première viscosité est d'au moins 25 fois la seconde viscosité, telle que mesurée à l'aide d'un viscosimètre à cône et plateau à 190°C, à 6,283 rad $s^{-1}$ et à 500 s; et dans laquelle le polymère de base est un poly(chlorure de vinyle).

**2.** Composition selon la revendication 1, dans laquelle le polymère de base est présent en la quantité de 80 à 99,95 % en poids, basée sur le poids entier de la composition thermoplastique pouvant être transformée à l'état fondu.

**3.** Composition selon la revendication 1, dans laquelle le polymère formant support est choisi parmi le groupe constitué des copolymères d'éthylène-acétate de vinyle ; des copolymères d'acrylate; du polyéthylène; du polypropylène et de leurs copolymères; et des homo et co-polymères du tétrafluoroéthylène.

**4.** Composition selon la revendication 1, dans laquelle le polymère formant support est présent en la quantité de 0,05 à 20 % en poids, basée sur le poids entier de la combinaison.

**5.** Composition selon la revendication 1, dans laquelle l'additif de modification de surface est une matière solide choisie parmi le groupe constitué des silicates; des oxydes métalliques; du carbonate de calcium; du sulfate de baryum; des poudres de métal élémentaires; des silices et de leurs mélanges.

**6.** Composition selon la revendication 5, dans laquelle les oxydes métalliques sont choisis parmi le groupe constitué du dioxyde de titane, de l'oxyde de magnésium, de calcium, de baryum, de strontium, de zinc, d'étain, de nickel, de silicium, et de fer, de sélénium, de tungstène, de ruthénium, de tantale, d'argent, d'iridium, de molybdène, de niobium, d'indium, de cadmium, d'hafnium, de zirconium, de manganèse, de cuivre (I), de vanadium, de chrome (VI), d'yttrium, et de germanium, de la silice sublimée et des oxydes mixtes d'aluminosilicate et de $Ti_xZr_{1-x}O_2$ dans laquelle x est compris entre 0 et 1.

**7.** Composition selon la revendication 1, dans laquelle l'additif de modification de surface a un diamètre de particule de 0,02 $\mu$m à 50 $\mu$m.

**8.** Composition selon la revendication 1, dans laquelle l'additif de modification de surface est choisi parmi les carbonates, les sulfates, les titanates, les arséniures, les sulfures, les séléniures, les phosphides et les combinaisons de deux ou plusieurs d'entre eux; est choisi parmi un pigment inorganique, un pigment organique coloré, et leurs mélanges; est un biocide; est choisi parmi les substances chimiques fluorées, la lécithine et leurs mélanges; ou est du noir de carbone, ou un ionomère de potassium.

9. Composition selon la revendication 1, dans laquelle l'additif de modification de surface peut être présent en la quantité de 0,05 à 20 % en poids, basée sur le poids entier de la composition.

10. Procédé de fabrication d'une pièce ayant des caractéristiques de surface améliorées comprenant:

la fourniture d'un polymère de base comprenant un premier polymère thermoplastique pouvant être transformé à l'état fondu ayant un premier paramètre de solubilité de Fedor et une première viscosité;
la formation d'une combinaison d'un polymère formant support et d'un additif de modification de surface, le polymère formant support comprenant un second polymère thermoplastique pouvant être transformé à l'état fondu qui a un second paramètre de solubilité qui est au moins de 2,5 $(J/cm^3)^{1/2}$ inférieur au premier paramètre de solubilité et une seconde viscosité, le polymère formant support adhérant à l'additif de modification de surface;
le traitement d'une proportion majeure d'un polymère de base et la combinaison d'un polymère formant support et d'un additif de modification de surface formée à l'étape précédente;
dans lequel la première viscosité est d'au moins 25 fois la seconde viscosité, telle que mesurée à l'aide d'un viscosimètre à cône et plateau à 190°C, à 6,283 rad $s^{-1}$ et à 500 s; et dans lequel le polymère de base est le poly(chlorure de vinyle).

11. Procédé selon la revendication 10, dans lequel le traitement comprend l'extrusion.

12. Procédé selon la revendication 10, dans lequel le procédé comprend le moulage par injection.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5560845 A, Birmingham, Jr.
- US 2005023992 A
- US 3301881 A
- US 4479977 A